Europäisches Patentamt

European Patent Office

Office européen des brevets

(19)

(11) Numéro de publication : **0 489 650 A1**

# (12) DEMANDE DE BREVET EUROPEEN

(21) Numéro de dépôt : **91403275.0**

(22) Date de dépôt : **03.12.91**

(51) Int. Cl.⁵ : **G02B 3/00**

(30) Priorité : **04.12.90 FR 9015159**

(43) Date de publication de la demande :
**10.06.92 Bulletin 92/24**

(84) Etats contractants désignés :
**DE GB NL**

(71) Demandeur : **THOMSON-CSF**
**51, Esplanade du Général de Gaulle**
**F-92800 Puteaux (FR)**

(72) Inventeur : **Broussoux, Dominique**
**THOMSON-CSF, SCPI, Cédex 67**
**F-92045 Paris la Défense (FR)**
Inventeur : **Bureau, Jean-Marc**
**THOMSON-CSF, SCPI, Cédex 67**
**F-92045 Paris la Défense (FR)**
Inventeur : **Dolfi, Daniel**
**THOMSON-CSF, SCPI, Cédex 67**
**F-92045 Paris la Défense (FR)**
Inventeur : **Lazare, Sylvain**
**THOMSON-CSF, SCPI, Cédex 67**
**F-92045 Paris la Défense (FR)**

(74) Mandataire : **Guérin, Michel et al**
**THOMSON-CSF SCPI**
**F-92045 PARIS LA DEFENSE CEDEX 67 (FR)**

(54) Procédé de réalisation de microlentilles pour applications optiques.

(57)    L'invention concerne un procédé de réalisation de microlentilles pour applications optiques (visualisation par exemple) résultant du dépôt d'un liquide sur un substrat dont la surface a été localement modifiée afin d'y accroître la mouillabilité du liquide. Le substrat peut être un polymère et le liquide mouillant un fluide organique capable de durcir par un traitement adapté.

FIG.4

EP 0 489 650 A1

La présente invention, due à Messieurs D. BROUSSOUX, J.M. BUREAU, D. DOLFI (THOMSON-CSF) et à Monsieur S. LAZARE (Laboratoire de Photophysique Photochimie Moléculaire, URA 348), concerne un nouveau procédé de réalisation de microlentilles, utilisables dans des applications optiques.

Il s'agit plus précisément de microlentilles élaborées sur un substrat souple ou rigide, organique, métallique ou semiconducteur.

De façon générale, une lentille est un dispositif optique capable de modifier la convergence d'un faisceau lumineux grâce à la courbure d'une de ses faces. Elle est formée par une portion de sphère et définie par sa focale, dépendante de l'indice de réfraction du matériau et du rayon de courbure de la sphère.

Associées collectivement, des microlentilles peuvent être utilisées par exemple en visualisation, pour augmenter l'espace interpixel de manière à faciliter l'implantation des pistes de commande des pixels ou dans des dispositifs de lecture optique ou des imageurs à rayons X. Dans ces deux derniers types d'applications, on fait converger par l'intermédiaire de la matrice de microlentilles, des faisceaux de photons sur des éléments photoconducteurs capables de transmettre les informations.

Plusieurs techniques de fabrication de microlentilles existent à ce jour :

Corning utilise une technique qui permet de fabriquer de façon collective des lentilles en soumettant un verre photosensible à un rayonnement UV à travers un masque. Le verre subit alors un traitement thermique à une température comprise entre 500 et 600°C, entraînant une cristallisation des zones soumises aux ultra-violets, et donc localement une densification du matériau. Cette densification génère une contraction des dimensions ce qui oblige les zones non éclairées à ressortir sous forme sphérique. L'inconvénient de cette technologie est la nature du substrat qui oblige à utiliser un verre photosensible particulier, rigide et qui ne permet pas de faire varier notablement la focale de la microlentille ainsi formée.

Nippon Sheet Glass Co. a développé des microlentilles en utilisant la technique de l'échange d'ions qui consiste à échanger un ion du substrat avec un ion d'un sel fondu préalablement déposé au travers d'un masque métallique. Le substrat est identique à celui de Corning, il s'agit de silice contenant des oxydes différents pouvant migrer à des températures supérieures à 500°C. A ces températures, les ions du sel fondu diffusent de l'extérieur vers l'intérieur alors que les ions du substrat diffusent de l'intérieur vers l'extérieur, ceci entraînant un gradient d'indice. Les inconvénients de cette technique résident dans la durée du procédé, environ 100 heures et ce à des températures très élevées (500°C).

Xerox a développé une autre technique consistant à déposer sur un substrat de quartz, une structure d'aluminium ne laissant transparente que des disques de diamètre d. Centré sur ces zones transparentes est déposé un motif de résine positive de diamètre D tel que D soit supérieur à d. Après inversion de la résine par UV profonds, on obtient un motif de cylindre de diamètre D' compris entre d et D. Plusieurs traitements thermiques et UV (Applied Optics, vol. 27, n° 7, 1988) permettent de transformer les cylindres en sphères. L'avantage de cette technique réside dans l'utilisation des techniques classiques de la microélectronique mais les inconvénients majeurs restent les nombres d'étapes et de masques à utiliser pour ce procédé ainsi que la maîtrise des dimensions des motifs, et celle de la résistance des couches inférieures aux solvants chimiques employés.

D'une façon générale, ces techniques ne permettent pas de réaliser des microlentilles sur des substrats variés tels que les semiconducteurs, les polymères, les métaux ou les cristaux, mais uniquement sur des substrats rigides dont la nature est limitée ; de plus la plupart d'entre elles comportent des protocoles complexes avec de nombreuses étapes.

Dans ce contexte, la présente invention propose un nouveau procédé de fabrication de microlentilles, pouvant être notamment élaborées sur un substrat souple organique pouvant être déposé ou accolé ultérieurement sur tout autre support, ce procédé ne présentant que très peu d'étapes de réalisation. Les microlentilles selon l'invention sont obtenues à partir d'un matériau fluide dont la mouillabilité sur un substrat adapté est localement accrue par un traitement spécifique du substrat.

D'une manière générale, lorsqu'un liquide est mis en contact avec un solide il se forme à l'équilibre, une goutte dont l'enveloppe fait un angle A avec la surface sur laquelle elle est déposée. Cet angle A est relié par l'équation de Young aux énergies libres de surface $W_s$ du solide et $W_L$ du liquide ainsi qu'à l'énergie libre interfaciale $W_{SL}$ du liquide par la relation : $W_{SL} = W_S - W_L \cos A$. Cet angle pouvant être évalué optiquement fournit un critère empirique de l'aptitude d'un liquide à mouiller un substrat solide ; ainsi lorsque A est voisin de 0, le liquide mouille très bien le substrat solide. On montre également que $\cos A$ tend vers 1 pour des valeurs de $W_L$ inférieures à une valeur critique $W_C$ dépendante du substrat et que $\cos A$ diminue linéairement avec $W_L$ pour des valeurs supérieures à $W_C$ ; la valeur $W_C$ étant d'autant plus élevée que $W_S$ est élevée.

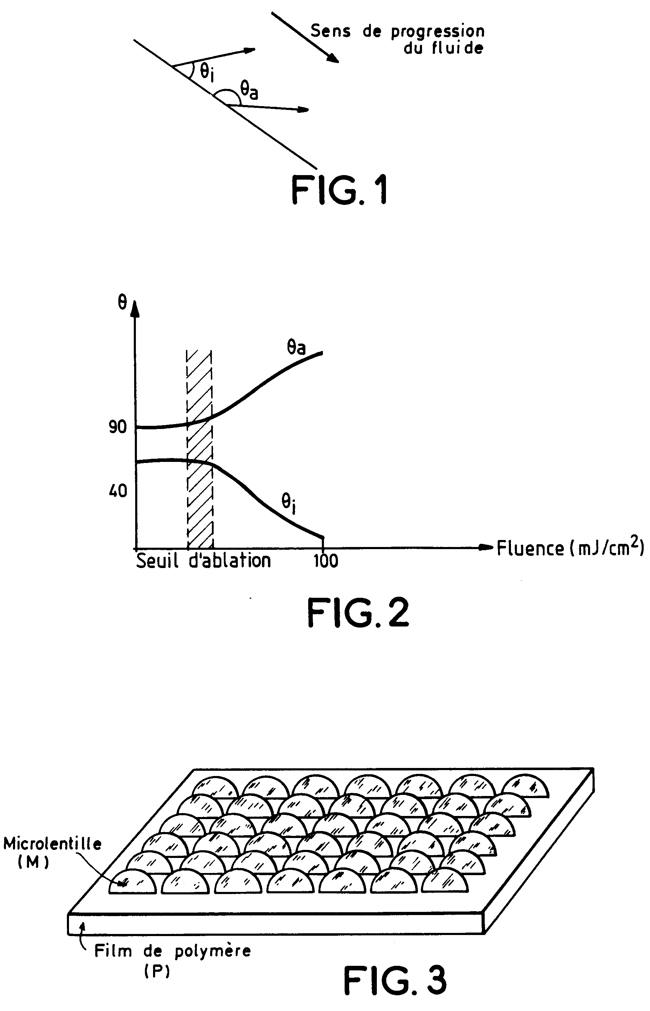

Ainsi, le verre et les métaux qui ont des énergies de surface élevées, sont mouillés par la plupart des liquides alors que les matériaux polymères dont l'énergie de surface est faible ne sont mouillés que par des liquides présentant une tension superficielle inférieure à la valeur seuil $W_C$. En pratique, on constate que l'angle A peut prendre une valeur comprise entre $A_a$ angle dit "avançant" et $A_r$ angle dit "reculant",

ces angles étant définis par rapport à la direction de progression du fluide (figure 1), et qu'il dépend en particulier de la technique employée pour former la goutte. En utilisant le dépôt à la pipette l'angle A défini avec le substrat formé par la goutte obtenue tend vers l'angle $A_a$ alors qu'une goutte réalisée par la coalescence à partir d'un film génère un angle A proche de $A_r$. L'hystérèse qui existe entre $A_a$ et $A_r$ est dépendante de la nature du substrat solide ainsi les polymères qui possèdent des surfaces lisses, présentent une hystérèse faible et ne retiennent pas les liquides à forte tension superficielle qui ont tendance à glisser dessus. Il est cependant possible d'augmenter la différence $A_a$ - $A_r$ de façon à augmenter la mouillabilité de liquides sur un substrat de type polymère. En effet une augmentation de $A_a$ accompagnée d'une diminution de $A_r$, accroît l'aptitude d'un substrat à être mouillé par une catégorie donnée de liquide. Des études menées sur le couple [eau, film de polymère Kapton (polyimide commercialisé) ] ont montré qu'en présence d'une très forte irradiation UV générée par un laser émettant dans l'ultraviolet entre 100 et 400 nm, ce laser pouvant être de type excimère il est effectivement possible d'influencer le paramètre $A_a$ - $A_r$ (figure 2). La Fluence illustre la densité d'énergie fournie par le laser et la zone hachurée correspond à l'apparition du seuil d'ablation du Kapton, valeur au-delà de laquelle la matière est expulsée du polymère.

La présente invention utilise ce phénomène physique pour obtenir des gouttes en des endroits déterminés sur un substrat qui naturellement n'est pas ou peu mouillé par des liquides.

On peut utiliser comme substrat un polymère capable de modifier localement son état de surface par un traitement adapté et on y dépose un liquide qui va coalescer aux endroits traités. Ce liquide doit être capable de prendre en masse afin d'assurer l'obtention de microlentilles à partir des gouttes formées sur le substrat. De manière générale, on trouvera plus facilement parmi les matériaux organiques des substances peu mouillables dont la mouillabilité peut être localement augmentée. De même, le liquide déposé sera en général une substance organique.

L'invention a donc pour objet un nouveau procédé de fabrication de microlentilles réalisées de façon collective, résultant du dépôt d'un liquide sur un substrat dont la surface a été localement modifiée afin d'y accroître la mouillabilité du liquide ; ce traitement pouvant être de type irradiation UV. Le substrat pouvant être de nature organique est de préférence un polymère très peu mouillé par les composés organiques ; il peut s'agir par exemple de polymères aromatiques très stables formant très peu de liaisons de type "hydrogène" avec une goutte de matériau organique. Ces polymères aromatiques peuvent être par exemple de type polyimide tels que le Kapton (polyimide commercialisé ) ou de type polyphénylquinoxaline. Le matériau formant la microlentille est de préférence un matériau organique fluide capable de durcir par un traitement adapté. Il peut s'agir par exemple de résine thermodurcissable ou de résine durcissable par rayonnement ultraviolet de type résine époxy ou résine silicone ou encore de monomère polymérisable en masse tel que le styrène. Pour créer des zones préférentielles de mouillabilité le substrat doit de préférence subir un traitement capable de modifier son état de surface. Un tel traitement peut par exemple être de type rayonnement ultraviolet intense capable d'induire des réactions photochimiques pour favoriser les liaisons entre le matériau organique mouillant et le substrat.

L'invention sera mieux comprise et d'autres avantages apparaîtront à la lecture de la description qui va suivre, donnée à titre d'exemple non limitatif, et grâce aux dessins annexés parmi lesquels :

– la figure 1 illustre les angles $A_a$ dit avançant et $A_r$ dit reculant, par rapport à la direction de progression d'un fluide sur un substrat donné ;

– la figure 2 montre l'influence d'un traitement ultraviolet de forte densité d'énergie préalablement subi par le substrat, sur les angles $A_a$ et $A_r$ formés lors du dépôt d'une goutte sur un substrat de type Kapton ;

– la figure 3 montre un exemple de réalisation de matrice de microlentilles, obtenu avec un substrat souple de polymère Kapton et de gouttes formées à partir d'un mélange (résine Epotecny, durcisseur) ;

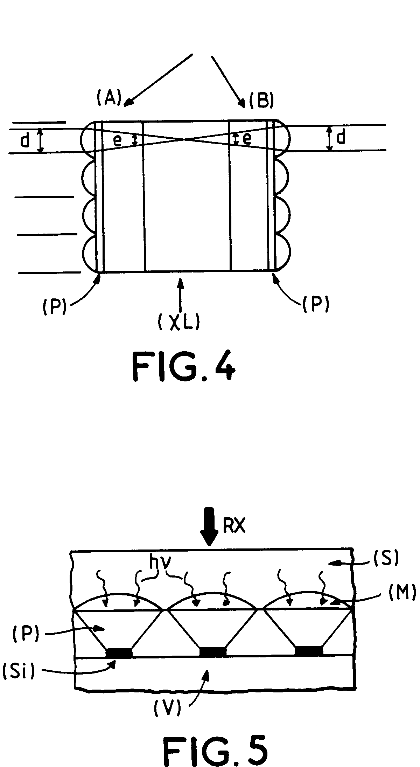

– la figure 4 illustre un modulateur spatial de lumière utilisant deux jeux de matrices de microlentilles selon l'invention ;

– la figure 5 montre un imageur à rayons X utilisant un réseau de microlentilles selon l'invention.

Dans un exemple de réalisation, pour obtenir une matrice de microlentilles on utilise un film souple de polymère ; en utilisant un dispositif à projection de masque ou un masque réalisé par les techniques classiques utilisées en microlithographie, on irradie le substrat polymère avec une source de forte densité d'énergie d'un laser excimère de type Argon-Fluor émettant à 193 nm ou de type Krypton-Fluor émettant à 248 nm ou encore de type Xénon Chlore émettant à 308 nm. De préférence, cette irradiation est effectuée sous air ou sous atmosphère à humidité contrôlée. On adapte la nature du laser à celle du polymère substrat dont on veut modifier la structure chimique en surface ; la nature du polymère étant choisie afin d'assurer une transparence du substrat aux longueurs d'ondes d'utilisation.

Sur le substrat localement irradié et modifié on dépose un film de matériau organique fluide soit par dépôt à la pipette, soit par condensation d'une vapeur. Après dépôt, le fluide se concentre progressivement sur les zones irradiées ; à l'équilibre on obtient des gouttes de fluide réparties dans les endroits non masqués. Il convient alors de faire durcir le fluide organique de manière à obtenir des gouttes solides sur le substrat, formant la matrice de microlentilles (figure 3). Pour cela la matrice est soumise à un traitement thermique ou photochimique permettant d'induire des réticulations afin de rigidifier les gouttes organiques.

Le contrôle de la quantité déposée de matériau organique permet d'influencer l'épaisseur et donc la focale des microlentilles. La matrice de microlentilles réalisée sur un film souple peut être ultérieurement accolée sur tout autre support organique, métallique ou semiconducteur. Il est également possible de déposer par centrifugation un film de polymère sur tout autre support puis d'opérer selon le procédé précédemment décrit. Le substrat de polymère peut aussi être rigide.

Les matrices de microlentilles selon l'invention peuvent être utilisées dans des modulateurs spatiaux de lumière. Sur une matrice à cristal liquide constituée par un cristal liquide (XL) inséré entre deux lames de verre localement conductrices (A et B) on accole de part et d'autre un film de polymère (P) sur lequel ont été réalisées selon le procédé de l'invention des microlentilles. Un tel dispositif permet d'adresser des pixels de petite dimension e par des pistes de commandes plus larges (dimension d).

Les matrices de microlentilles selon l'invention peuvent apparaître très intéressantes dans des imageurs type imageurs à rayons X. Pour cela, un rayonnement X transportant des informations vient irradier un matériau scintillateur (S) de type iodure de césium ou autre capable de transformer les rayons X en photons visibles. Ces photons irradient alors la matrice de microlentilles (M) déposée sur un support polymère (P) lui-même déposé sur du verre (V) comportant localement un réseau d'éléments photosensibles (Si) (figure 5). Les microlentilles permettent de transmettre en intégralité les informations générées par les photons, en effet il n'y a pas d'énergie perdue dans les intervalles entre éléments photosensibles dans le cas présent.

On va décrire un exemple de réalisation de matrice de microlentilles selon le procédé de l'invention :

Une feuille de Kapton de 125 μm d'épaisseur et de surface S = 100x100 mm² est choisie comme support organique. Cette feuille est irradiée avec un système à projection de masque mécanique, laissant passer un faisceau sur des plots de 25 μm de diamètre, au pas de 40 μm. L'irradiation est réalisée avec une impulsion d'un laser Argon Fluor émettant à 193 μm, cette impulsion générant une Fluence de 100 mJ/cm². Ce traitement surfacique est effectué dans une enceinte à humidité contrôlée (la vapeur d'eau favorisant très nettement l'apparition de liaisons dites de type "hydrogène").

On dépose sur la feuille de Kapton localement irradiée, le mélange EPOTECNY de type EPOTEK 302-3 comprenant de la résine epoxy et un agent durcisseur. Une centrifugation effectuée à 5000 trs/min pendant 20 secondes permet l'obtention d'un film de 0,3 μm d'épaisseur. L'échantillon est alors laissé au repos une heure à l'ambiante ; temps au bout duquel il se forme des gouttes de mélange sur les zones irradiées. L'ensemble feuille de Kapton-mélange epotek 302-3 est laissé à la température ambiante durant 12 heures (ce cycle lent de durcissement n'entraînant pas de retrait de la structure) afin de rigidifier les gouttes. Les microlentilles ainsi réalisées ont un indice n = 1, 5430 et sont transparentes entre 375 et 900 nm. Il est possible de déterminer leur focale à partir de leur épaisseur e = 2 μm. Dans le cas de lentille mince (e << d) on a

$$f = \frac{d}{2(n-1)\sin A} \text{ avec tg } A = \frac{2e}{d}$$

où A est l'angle décrit précédemment. Le calcul détermine A = 4,5° et la focale f = 0,3 mm.

## Revendications

1. Procédé de réalisation de microlentilles, caractérisé en ce que les microlentilles sont obtenues par dépôt d'un matériau sur un substrat et que le procédé comporte une étape de traitement local surfacique du substrat créant des zones préférentielles de mouillabilité du matériau sur le substrat.

2. Procédé de réalisation de microlentilles selon la revendication 1, caractérisé en ce que le substrat est de nature organique.

3. Procédé de réalisation de microlentilles selon la revendication 2, caractérisé en ce que la surface du substrat est localement modifiée par un rayonnement UV intense.

4. Procédé de réalisation de microlentilles selon la revendication 3, caractérisé en ce que le rayonnement UV intense est produit par un laser excimère.

5. Procédé de réalisation de microlentilles selon la revendication 2, caractérisé en ce que le substrat organique est un polymère aromatique.

6. Procédé de réalisation de microlentilles selon la revendication 5, caractérisé en ce que le polymère aromatique est de type polyimide ou de type polyphenylquinoxaline.

7. Procédé de réalisation de microlentilles selon la revendication 1, caractérisé en ce que les microlentilles sont constituées par un matériau organique.

8. Procédé de réalisation de microlentilles selon la revendication 7, caractérisé en ce que le matériau organique constituant les microlentilles comprend une résine thermodurcissable ou une résine durcissable par rayonnement UV.

9. Procédé de réalisation de microlentilles selon la revendication 8, caractérisé en ce que le matériau organique constituant les microlentilles est un mélange de résine époxy et d'agent durcisseur ou un mélange de résine silicone et d'agent durcisseur.

10. Procédé de réalisation de microlentilles selon la revendication 7, caractérisé en ce que le matériau organique constituant les microlentilles comprenant un monomère polymérisable en masse.

11. Procédé de réalisation de microlentilles selon la revendication 10, caractérisé en ce que le monomère polymérisable en masse est de type styrène.

Sens de progression
du fluide

$\theta_i$

$\theta_a$

# FIG.1

$\theta$

$\theta_a$

$\theta_i$

90

40

Seuil d'ablation

100

Fluence $(mJ/cm^2)$

# FIG.2

Microlentille
(M)

Film de polymère
(P)

# FIG.3

6

FIG.4

FIG.5

**Office européen des brevets**

# RAPPORT DE RECHERCHE EUROPEENNE

Numero de la demande

EP    91 40 3275

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | PATENT ABSTRACTS OF JAPAN vol. 7, no. 58 (E-163)(1203) 10 Mars 1983 & JP-A-57 204 184 ( RICOH K.K. ) 14 Décembre 1982 | 1 | G02B3/00 |
| Y | * abrégé * | 2-4 | |
| Y | PATENT ABSTRACTS OF JAPAN vol. 14, no. 417 (C-756)(4360) 10 Septembre 1990 & JP-A-2 158 632 ( AGENCY OF IND SCIENCE AND TECHNOL ) 19 Juin 1990 | 2-4 | |
| A | * abrégé * | 5-11 | |
| A | GB-A-2 199 156 (THORN EMI PLC) * revendications 1,7 * | 1,2,5-11 | |

**DOMAINES TECHNIQUES RECHERCHES (Int. Cl.5 )**

G02B

Le présent rapport a été établi pour toutes les revendications

| Lieu de la recherche | Date d'achèvement de la recherche | Examinateur |
|---|---|---|
| LA HAYE | 04 MARS 1992 | GRUNFELD M.Y. |